Europäisches Patentamt

European Patent Office

Office européen des brevets

(19)

(11) EP 0 689 679 B1

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(51) Int Cl.$^6$: **G01S 7/52**, G01S 15/88, G01F 23/28

(21) Anmeldenummer: **94908958.5**

(22) Anmeldetag: **10.03.1994**

(86) Internationale Anmeldenummer:
**PCT/DE94/00249**

(87) Internationale Veröffentlichungsnummer:
**WO 94/22033 (29.09.1994 Gazette 1994/22)**

(54) **VERFAHREN ZUR ERKENNUNG UND SEPARATION VON NUTZ- UND STÖRECHOS IM EMPFANGSSIGNAL VON ABSTANDSSENSOREN, WELCHE NACH DEM IMPULS-ECHO-PRINZIP ARBEITEN**

PROCESS FOR RECOGNIZING AND DISCRIMINATING BETWEEN USEFUL AND INTERFERING ECHOS IN THE RECEPTION SIGNAL OF DISTANCE SENSORS WORKING ACCORDING TO THE PULSE-ECHO PRINCIPLE

PROCEDE DE RECONNAISSANCE ET DE DISCRIMINATION ENTRE DES ECHOS UTILES ET DES ECHOS PARASITES DANS LE SIGNAL DE RECEPTION DE CAPTEURS DE LA DISTANCE FONCTIONNANT SELON LE PRINCIPE D'IMPULSIONS-ECHOS

(84) Benannte Vertragsstaaten:
**AT BE CH DE DK ES FR GB IT LI LU NL SE**

(30) Priorität: **16.03.1993 DE 4308373**

(43) Veröffentlichungstag der Anmeldung:
**03.01.1996 Patentblatt 1996/01**

(73) Patentinhaber: **SIEMENS AKTIENGESELLSCHAFT 80333 München (DE)**

(72) Erfinder:
• **KROEMER, Nils D-09337 Hohenstein-Ernstthal (DE)**

• **VOSSIEK, Martin D-59075 Hamm (DE)**
• **ECCARDT, Peter-Christian D-85521 Ottobrunn (DE)**
• **MAGORI, Valentin D-81539 München (DE)**

(56) Entgegenhaltungen:
**EP-A- 0 340 953      US-A- 4 380 807 US-A- 4 821 569**

• **ADVANCES IN INSTRUMENTATION AND CONTROL; Vol 46, Teil 2, 1991; Research Triangle Park, NC, US; DUNCAN: 'Ultrasonics in Solids Level Measurements', Seiten 1355-1366.**

**Beschreibung**

Die Erfindung betrifft Ultraschall-Abstandssensoren auf der Basis des Impuls-Echo-Verfahrens mit erhöhter Meßsicherheit und verbesserter Unterdrückung von Störechosignalen. Bedeutende Applikationsgebiete sind die berührungslose Distanzmessung für die Positionierung von Werkstücken, der Kollisionsschutz oder die Füllstandsmeßtechnik.

Bekannt sind Ultraschall-Sensoren, welche den Abstand zwischen dem Sensor und einem schallreflektierenden Objekt durch die Messung der Laufzeit eines Schallsignals vom Sensor zum Objekt und zurück bestimmen. Hierbei wird das Echo üblicherweise dadurch erfaßt, daß das Überschreiten eines vorgegebenen Schwellwertes im Empfangssignal ausgewertet wird. Dieses Verfahren zur Abstandsmessung wertet üblicherweise die Laufzeit des ersten detektierten Echos aus. Eventuell folgende Echos von anderen im Erfassungsbereich des Sensors liegenden Objekten werden hingegen nicht weiterverarbeitet. Durch eine Zeitfenstersteuerung nach Mágori, V.; Walker, H.: Ultrasonic Presence Sensors with Wide Range and High Local Resolution. IEEE Trans. Ultrasonics, Ferroelectrics and Frequency Control, UFFC-34, No. 2, Mar. 1987, S. 202-211, kann dabei der zulässige Detektionsbereich für Echosignale in gewünschter Weise variiert werden. Auf diese Weise können auch Echos von Objekten mit unterschiedlichen Abständen zum Sensor erfaßt werden, indem das Auswertezeitfenster zyklisch über den Meßbereich verschoben wird, wobei die Auflösung der Einzelechos und die Gesamtmeßdauer mit geringerer Länge des Zeitfensters zunehmen.

Bekannt sind außerdem Verfahren zur Verarbeitung von Ultraschall-Echosignalen, bei denen das Empfangssignal digital abgetastet und in einem Speicher abgelegt wird, wobei das Empfangssignal auch die demodulierte Hüllkurve der Echos sein kann (EP 0 459 336). Die Signalverarbeitung erfolgt im Anschluß an die Aufzeichnung des Empfangssignals durch Extraktion der Echos mittels eines geeigneten Verfahrens, z.B. Matched Filter + Schwellwertdetektion. Auf diese Weise können alle innerhalb einer Messung auftretenden Echos detektiert werden.

Auch in dem Verfahren, das in Advances in Instrumentation and Control, Vol 46, Teil 2, 1991, Research Triangle Park, NC, US, Duncan: "Ultrasonics in Solids Level Measurements", Seiten 1355-1366 beschrieben wird, wird das ausgesendete und später empfangene Ultraschallsignal mittels eines Mikroprozessors digitalisiert und als Hüllkurve gespeichert. Das Verfahren bezieht sich auf die Messung des Füllstands eines Behälters. Zur Bestimmung des Nutzechos wird das Echoprofil des Leerbehälters mit dem Echoprofil des gefüllten Behälters verglichen. Weiterhin ist es möglich, das Nutzecho dadurch zu erkennen, daß ein Vorwissen über die Beschaffenheit des in dem Behälter befindlichen Füllguts und das dazu charakteristische Echo zur Erkennung des Nutzechos verwendet wird.

Bekannt sind weiterhin Verfahren zur Unterdrückung von unerwünschten im Empfangssignal enthaltenen Echos, beispielsweise aufgrund störender Objekte, die sich zusätzlich zum Meßobjekt im Erfassungsbereich des Sensors befinden. Wenn die Störobjekte räumlich feststehen und gleichzeitig der Bewegungsbereich des Meßobjektes eingeschränkt ist, so kann eine hinreichende Unterdrückung von Störechos durch geeignete Wahl des Auswertezeitfensters erreicht werden.

Weiterhin ist bekannt, daß Störobjektechos dadurch unterdrückt werden können, daß in einer Einlernphase, bei der sich das Meßobjekt nicht im Erfassungsbereich des Sensors befindet, zunächst alle Störobjektechos detektiert und in einem Speicher abgelegt werden (DE 33 37 690). Während des Meßbetriebes werden die aktuell detektierten Echos mit den eingelernten Echos verglichen. Bei einer hinreichenden Übereinstimmung wird das Echo als Störobjektecho klassifiziert und entsprechend unterdrückt, während die übrigen Echos Meßobjekten zugeordnet werden.

In den Schriften DE 33 37 690 und EP 0 459 336 werden Verfahren beschrieben, welche durch Mehrfachreflexionen zwischen dem Sensor und einem Objekt verursachte Störechos dadurch ausblenden, daß die maximale auszuwertende Laufzeit begrenzt wird, so daß außerhalb dieser Laufzeit auftretende Echos ignoriert werden. Bei der in EP 0 459 336 dargestellten Lösung kann zusätzlich auch die Echoamplitude als Kriterium für die Mehrfachechounterdrückung ausgewertet werden. Für Meßsituationen mit mehreren Objekten im Erfassungsbebereich des Sensors sind diese Verfahren jedoch i.a. ungeeignet.

Bekannt sind weiterhin Verfahren zur Unterdrückung von Störechos auf der Basis von Plausibilitätsprüfungen (DE 38 21 103 und DE 38 21 577). Da der Gradient, mit welchem sich die Meßsituation ändern kann, aufgrund der endlichen Bewegungsgeschwindigkeit von Objekten begrenzt ist, werden Echos nur dann ausgewertet, wenn ihre zeitliche Lage und Amplitude aufgrund vorheriger Meßsituationen hinreichend plausibel sind. Auf diese Weise können vor allem stochastisch auftretende Störsignale sicher unterdrückt werden.

Allen obenbekannten Verfahren zur Auswertung von Echosignalen bei Ultraschall-Abstandssensoren ist gemeinsam, daß jedem im Empfangssignal detektierten Echo, welches kein stochastisches Störsignal ist, innerhalb der maximal auszuwertenden Laufzeit ein Objekt zugeordnet wird, wobei sich der Abstand zum Sensor aus der Schallaufzeit des Echos ergibt. Nachteilig an diesen bekannten Verfahren ist, daß somit auch Echos, welche beispielsweise durch mehrfache Reflexionen zwischen dem Sensor und einem einzigen Meßobjekt entstehen und die nicht außerhalb der maximalen auszuwertenden Laufzeit liegen, in fehlerhafter Weise weiteren, tatsächlich nicht vorhandenen Objekten zugeordnet werden. Dies kann zu sehr großen Fehlern bei der Beurteilung von Meßsituationen führen, insbesondere wenn sich Meßobjekte in geringem Abstand zum Sensor befinden.

Zwischen dem Schallwandler und den Objekten, die im Erfassungsbereich des Sensors liegen, kann das Schallsignal mehrmals reflektiert werden. In Abhängigkeit vom Abstand zwischen dem Objekt und dem Sensor, der Objektreflektivität und der Geometrie des Schallwandlers sowie der Ausbreitungsdämpfung klingen diese Mehrfachechos mehr oder weniger schnell ab. Bei einer ebenen Wandler- bzw. Reflektoroberfläche sowie bei einem geringen Abstand zwischen dem Wandler und dem Objekt liegt die Abklingzeitkonstante der Mehrfachechos in der Größenordnung der einfachen Schallaufzeit. Diese ergibt sich aus dem Weg vom Sensor zum Objekt und zurück. Dadurch werden mehrere Echos desselben Objektes im Empfangssignal detektiert. Zusätzliche Störechos können auftreten, wenn sich mehrere Objekte im Erfassungsbereich des Sensors befinden. Ursache hierfür sind Reflexionswege zwischen den einzelnen Objekten bzw. Mehrfachreflexionen an verschiedenen Objekten.

Bei allen bekannten Verfahren zur Echosignalverarbeitung besteht das Problem, daß die durch Mehrfachreflexionen entstehenden Störechos nicht von den direkten Objektechos unterschieden werden, was bei vielen in der Praxis vorkommenden Situationen zu Fehlmessungen führt.

Die Aufgabe der Erfindung ist es, ein Verfahren anzugeben, welches die beschriebenen Störechos eliminiert.

Gelöst wird die Aufgabe durch ein Verfahren gemäß dem Patentanspruch 1.

Vorteilhafte Weiterbildungen der Erfindung sind durch die in den Unteransprüchen angegebenen Merkmale gekennzeichnet.

Die Erfindung ist vorteilhaft anwendbar für intelligente Abstandssensoren mit objektselektiven Meßeigenschaften, insbesondere für die Abstandmessung unter durch störende Objekte erschwerten Bedingungen.

Im folgenden wird die Erfindung anhand von lediglich einen Ausführungsweg darstellenden Zeichnungen näher erläutert.

Figur 1 zeigt das Prinzip des Puls-Echo-Verfahrens.

Figur 2 zeigt die Entstehung von Mehrfachechos durch Reflexion des Schallsignals am Wandler oder zwischen den verschiedenen Objekten.

Figur 3 zeigt Merkmale eines Einzelechos.

Figur 4 zeigt das Prinzip der Mehrfachechoauswertung.

Figur 5 zeigt die Echoprofilauswertung bei sich zeitlich änderndem Echoprofil z. B. aufgrund des Rührwerkes.

Figur 6 zeigt die Echoprofilauswertung durch Vergleich mit dem gelernten Echoprofil (Teach-in-Profil)

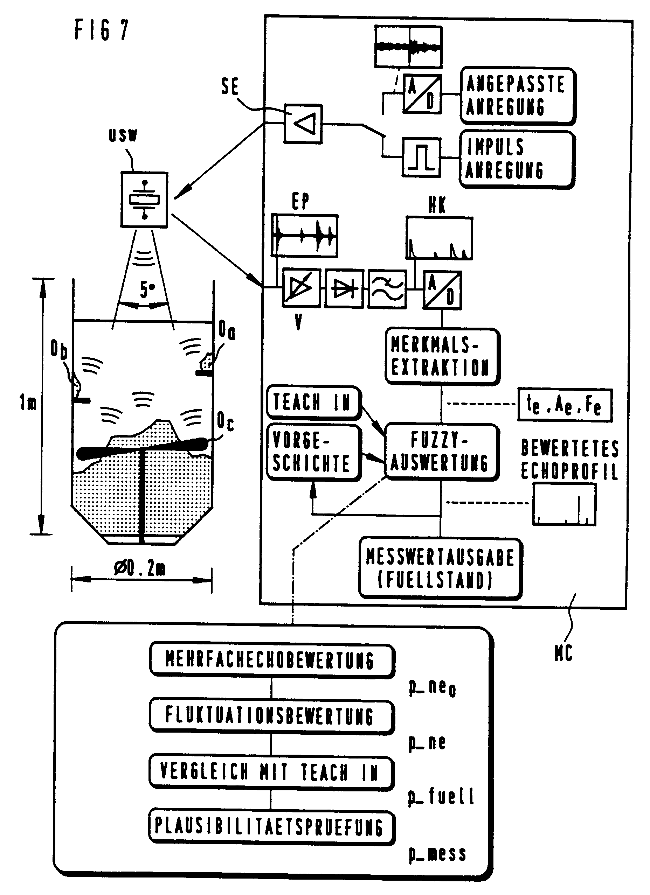

Figur 7 zeigt das Blockschaltbild einer möglichen Schaltungsanordnung für die Füllstandsmessung zur Echodetektion sowie zur Extraktion von Echomerkmalen. Ein Mikrocontroller übernimmt die Steuerung und die Auswertung der Messungen.

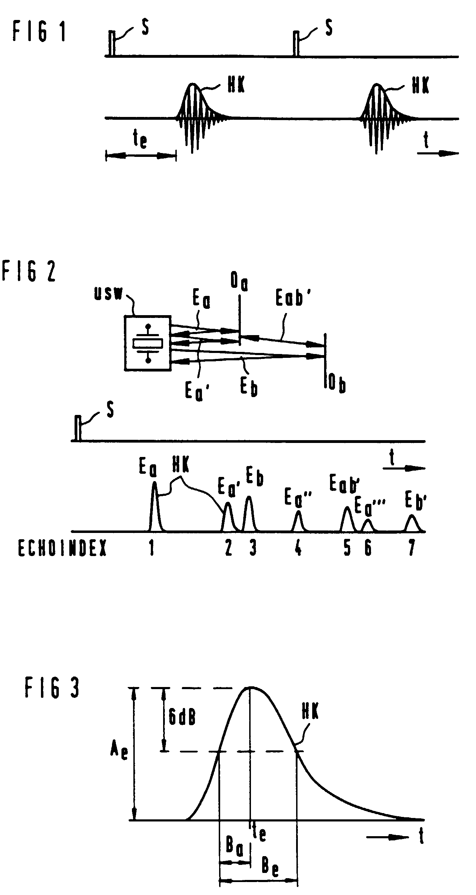

Die berührungslose Ultraschall-Abstandsmessung basiert auf der Bestimmung der Laufzeit eines Schallsignals von einem Schallwandler zum Meßobjekt und zurück (Impuls-Echo-Verfahren). Das Prinzip ist in Figur 1 dargestellt. Das impulsförmige Sendesignal S wird periodisch ausgesandt, am Reflektor (Meßobjekt) reflektiert und steht am Ausgang des US-Wandlers um die Zeit $t_e$ verzögert an. Zumeist wird nur das Hüllkurvensignal HK des hochfrequenten Empfangssignal ausgewertet. Der Meßbereich kann je nach gewählter Schallfrequenz von einigen mm bis zu mehreren 10 m betragen. Mit Ultraschall ist bei vergleichsweise geringem Aufwand eine hohe Wegauflösung in Richtung der Schallausbreitung erreichbar. Ein wesentlicher Vorteil besteht in Gegensatz zum optischen System in der weitgehenden Unempflindlichkeit gegenüber Staub und Beleuchtungsverhaltnissen sowie gegenüber der Materialbeschaffenheit, Farbe und Oberflächenrauhigkeit der Meßobjekte. Die Form und Amplitude der Echosignale können in starkem Maße von der Orientierung sowie der Geometrie eines Objektes abhängen. Ursache hierfür sind Abschattungen, spiegelnde Reflexionen sowie Interferenzen. Für die Abstandsmessung wirken sie als Störgrößen. Ein weiteres Problem besteht darin, daß bei gut reflektierenden Objekten infolge der Reflexion des Empfangssignals am Wandler häufig Mehrfachechos auftreten, welche das Vorhandensein weiterer Objekte vortäuschen (siehe Figur 2). Dies ist immer dann kritisch, wenn vom Sensor nicht nur die kürzeste Objektdistanz gemessen werden soll.

Das Sendesignal S, das vom Ultraschallwandler USW ausgesandt wird, wird zuerst am Objekt $O_a$ reflektiert. $E_a$ stellt die Hüllkurve HK des ersten Nutzechos des Objekts $O_a$ dar. Das zweite Echo $E_{a'}$ (erstes Mehrfachecho) trifft vor dem zweiten Nutzecho $E_b$, das vom Objekt b stammt, am Ultraschallwandler USW ein. $E_{a''}$ ist das zweite und $E_{a'''}$ das dritte Mehrfachecho des Objekts $O_a$. $E_{b'}$ ist das erste Mehrfachecho des Objekts $O_b$. $E_{ab'}$ ist das Echo, das aufgrund des parasitären Reflexionswegs zwischen den Objekten $O_a$ und $O_b$ zustande kommt.

Die Echos bzw. deren Hüllkurven sind mit folgenden Indizes versehen und die Laufzeiten setzen sich wie folgt zusammen:

| Echo | Ind ex | Laufzeit | Bedeutung |
|---|---|---|---|
| $E_a$ | 1 | $t_{e1}$ | Grundecho von Objekt a |
| $E_{a'}$ | 2 | $t_{e2}=t_{e1}+t_{e1}$ | erstes Mehrfachecho von Objekt a |
| $E_b$ | 3 | $t_{e3}$ | Grundecho von Objekt b |

(fortgesetzt)

| Echo | Ind ex | Laufzeit | Bedeutung |
|---|---|---|---|
| $E_{a''}$ | 4 | $t_{e4}=t_{e1}+t_{e2}$ | zweites Mehrfachecho von Objekt a |
| $E_{ab'}$ | 5 | $t_{e5}=t_{e3}+(t_{e3}-t_{e1})$ | Echo zwischen a und b |
| $E_{a'''}$ | 6 | $t_{e6}=t_{e1}+t_{e4}$ | drittes Mehrfachecho von Objekt a |
| $E_{b'}$ | 7 | $t_{e7}=t_{e3}+t_{e3}$ | erstes Mehrfachecho von Objekt b |

Bei der Füllstandsmessung wirken häufig mehrere Störgrößen gleichzeitig. Das an der Oberfläche von Schüttgütern rückgestreute Echo besitzt im allgemeinen eine wesentlich geringere Amplitude als von Verstrebungen oder anderen konstruktiven Elementen oberhalb des Schüttgutes hervorgerufene Reflexionen bzw. Mehrfachechos. Hinzu kommen zeitweise Abschattungen durch Rührwerke sowie Ablagerungen an den Behälterwänden, Weitere Störeinflüsse sind durch Luftturbulenzen und Störschall gegeben, welche Amplitudenfluktuationen von mehr als 20 dB bewirken können.

Aufgabe der Signalverabeitung ist es, das von der Füllgutoberfläche kommende Echo zuverlässig zu separieren. Da die Einhüllenden der einzelnen Echos im Empfangssignal nicht zwangsläufig signifikante Unterschiede aufweisen, ist eine einfache Erkennung anhand der Signalform in der Praxis kaum möglich.

Die Separation von Nutz- und Störgrößen erfolgt deshalb mit einer Fuzzy Auswerteeinheit. Als Eingangsgrößen wirken hierbei:

- Merkmale zur Charakterisierung eines Einzelechos
- Merkmale zur Beschreibung der Relationen zwischen mehreren Einzelechos
- Historie
- á priori-Wissen

Das á priori-Wissen ist stets situationsspezifisch. Im Falle der Füllstandsmessung gilt, daß das Füllgut dem am weitesten entfernt liegenden Echo, welches kein Mehrfachecho ist, zuzuordnen ist. Als á priori- Wissen kann auch die Kenntnis über die Lage der Festziele im Behälter (z. B. in Form eines Teach-in-Echoprofiles) sowie über die maximalen Befüll- und Entleerungsgeschwindigkeiten genutzt werden. Die Berücksichtigung der Historie ermöglicht Plausibilitätsprüfungen zur Unterdrückung von Fehlmessungen und Kompensation von Drifterscheinungen.

Das Echoprofil einer einzelnen Messung muß anhand signifikanter Kriterien (Fig. 3) bewertet werden. Die durchgeführten Untersuchungen haben gezeigt, daß das jeweilige Echo hinreichend gut durch folgende Merkmale beschrieben werden kann:

- zeitliche Lagedes Maximums Laufzeit $t_e$
- Signalamplitude $A_e$ des Maximums
- Formfaktor $F_e$ (aus den 6dB Breiten des Maximums)

Zur Vereinfachung des Auswerteaufwands genügt eine Aufzeichnung der Hüllkurve. Sämtliche Merkmale zur Beschreibung der Relationen zwischen jeweils zwei Echos untereinander sind daraus abgeleitete Größen.

Jedes Mehrfachecho ist dadurch gekennzeichnet, daß es sich aus einem oder mehreren vorhergehenden Echos ableiten läßt. Aus diesen Vorechos, welche auch selbst Mehrfachechos sein können, lassen sich unter Berücksichtigung der räumlichen Divergenz des Schallsignals sowie der frequenzabhängigen Ausbreitungsdämpfung Erwartungswerte für die Merkmale eines Mehrfachechos bestimmen.

Ein Nutzecho, das zur Zeit $t_e$ auftritt, besitzt üblicherweise ein Mehrfachecho 1. Ordnung zur Zeit $2t_e$, ein Mehrfachecho 2. Ordnung zur Zeit $3t_e$ usw.. Für die erwartete Laufzeit $t_e$ eines Mehrfachechos an der Stelle k gilt also (siehe hierzu auch Figur 2):

$$t_{ek} = t_{ei} + t_{ej} \qquad (1 <= i <= k,\ 1 <= j <= k)$$

i,j,k: Echoindex; ein höherer Index entspricht einer größeren Laufzeit

i=j: erstes Mehrfachecho des Objektes an der Stelle i

Zusätzliche Mehrfachechos können durch Reflexionswege zwischen mehreren Einzelobjekten hervorgerufen werden. Im einfachsten Fall (dünne Platten als Reflektoren) gilt dann:

$$t_{ek} = t_{ej} + (t_{ej} - t_{ei}) \qquad (i \neq j; \ 1 <= i, \ j < k)$$

Die Amplitude eines Signals erlaubt Aussagen über die auftretenden Verluste. Sie nimmt mindestens mit dem Faktor 1/r ab. Dabei stellt r den Abstand zum US-Wandler dar. Hinzu kommt noch eine Dämpfung $\alpha$ von etwa 0.015 dB/$\lambda$. Diese Abnahme kann jedoch noch wesentlich größer sein und hängt insbesondere von den auftretenden Reflexionsfaktoren ab. Hinsichtlich der Amplitude $A_e$ eines Mehrfachechos an der Stelle k, vgl. Figur 2 $E_{a'}$, $E_{a'}$, $E_{a''}$, $E_{a'''}$ welches sich aus den Vorechos i und j zusammensetzt, muß somit aufgrund der Divergenz des Schallstrahles ($A_e \sim$ 1/$t_e$) und der Ausbreitungsdämpfung folgende Bedingung erfüllt sein, sofern keine Reflexionswege zwischen den verschiedenen Objekten beitragen:

$$A_{ek} \cdot t_{ek} < \min \{(A_{ei} \cdot t_{ei}); (A_{ej} \cdot t_{ej})\} \ (i, j < k)$$

Für Mehrfachechos infolge eines Reflexionsweges zwischen zwei Objekten i und j gilt zumindest:

$$A_{ek} \cdot t_{ek} < \max \{(A_{ei} \cdot t_{ei}); (A_{ej} \cdot t_{ej})\} \ (i, j < k)$$

Die Signalform eines Echos kann durch unterschiedliche Parameter wie z. B. Anstiegs und/oder Abklingzeit oder das Verhaltnis von Amplitude zu Breite charakterisiert werden. Für die Praxis erscheint ein aus mehreren Signalformparametern abgeleiteter Formfaktor $F_e$ als zweckmäßig. Für das im Rahmen dieser Erfindung entwickelte Auswerteverfahren wurde der Formfaktor aus der Einhüllenden wie folgt bestimmt (siehe Figur 3):

$$F_e = (B_a / 6dB) \setminus (B_e / 6dB)$$

Wobei $B_a$ die Zeit ist, die zwischen dem Erreichen des Amplitudenmaximums $A_e$ und dem links davon liegenden 6dB Abfall verstreicht. $B_e$ ist die Zeit, die verstreicht, bis das Signal vom Amplitudenmaximum $A_e$ bis zum rechts davon liegenden 6dB Abfall abgeklungen ist.

Bei Reflexionen an ebenen oder einfachen regelmäßig gekrümmten Flächen bleibt die Signalform im wesentlichen erhalten. In diesen Fällen besitzen Mehrfachechos eine ähnliche Einhüllende wie die zugehörigen Vorechos i und j:

$$F_{ek} = F_{ei}, F_{ej}$$

Das Verfahren zur Klassifizierung eines Echos als Nutz- oder Mehrfachecho beruht darauf, daß die Merkmale jedes detektierten Echos mit den aus den Vorechos berechneten Erwartungswerten verglichen werden. Hierfür erweisen sich normierte Merkmalsdifferenzen als besonders geeignet.

$$D_{M\,m} = (M_{meß\,m} - M_{erw\,m}) / M_{erw\,m}$$

$M_{meß}$: gemessenes Merkmal m, wobei das Merkmal m $t_e$, $A_e$ oder $F_e$ sein kann.
$M_{erw}$: Erwartungswert des Merkmales m
$D_{M\,m}$: skalierte Merkmalsdifferenz

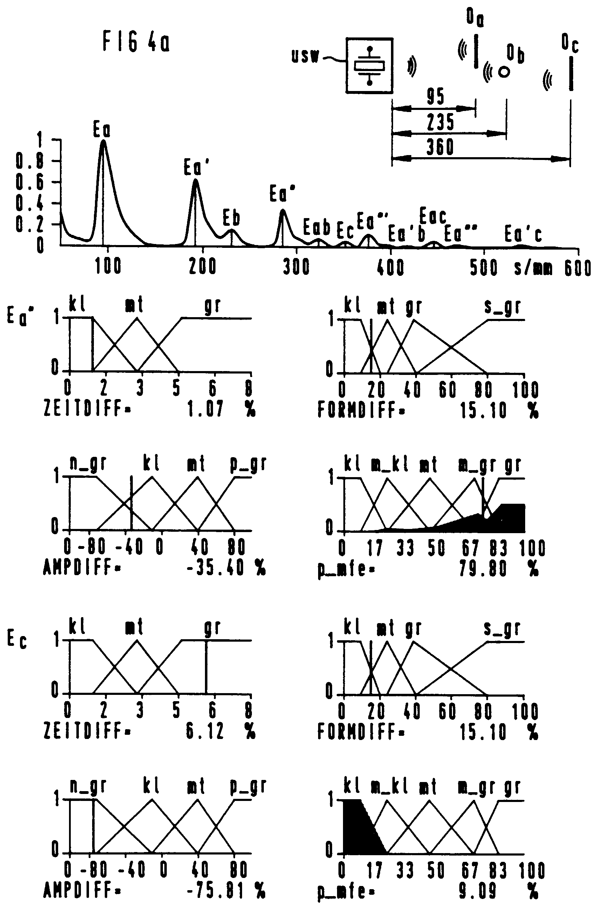

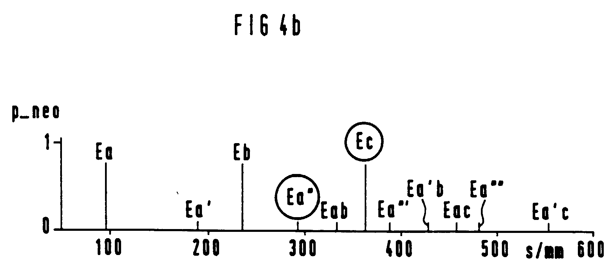

Im konkreten Fall bedeuten kleine Differenzen, daß das betreffende Echo mit höherer Wahrscheinlichkeit der Klasse "Mehrfachecho" zuzuordnen ist. Wegen der oben aufgeführten Einflußfaktoren auf die Schallausbreitung stellen die Erwartungswerte $M_{erw}$ stets nur Schätzwerte dar. Eine binäre Ja/Nein-Entscheidung bei der Mehrfachechobewertung ist somit kaum sinnvoll. Daher werden die Differenzwerte $D_{M\,i}$ als Eingangsgrößen für die Fuzzy-Auswerteeinheit verwendet. Figur 4a illustriert anhand einer Meßsituation und des zugehörigen Echoprofiles das Verfahren am Beispiel zweier Teilechos ($E_{a''}$ und $E_e$). Als Ergebnis der Defuzzifizierung wird jedem Teilecho ein Wert zugeordnet, welcher die Mehrfachecho-Wahrscheinlichkeit $P_{MFE}$ beschreibt (Figur 4b). Die Ordinate trägt hier die Wahrscheinlichkeit für ein Nutzecho $P_{neo}$, welche das Komplement zur Mehrfachechowahrscheinlichkeit $P_{MFE}$ ist. In Figur 4a bedeutet kl kleine Differenz, mt mittlere, gr große, n-gr negativ große und p-gr positiv große, s-gr sehr große, m-kl mittelkleine und m-gr mittelgroße Differenz, sowie s-gr sehr große Differenz.

Da die Bewegungsgeschwindigkeit von Objekten im Erfassungsbereich des Sensors stets begrenzt ist, kann sich das Echoprofil von einem zum anderen Meßzyklus nicht sprunghaft ändern. Dieses Wissen wird üblicherweise zur Plausibilitätsbewertung einzelner Echos genutzt. Da andererseits die Geschwindigkeit der Situationsänderung nur selten exakt bekannt ist und Echos aufgrund von Luftbewegungen oder zeitweisen Abschattungen stark fluktuieren können, erweisen sich Verfahren mit festen Schwellenwerten als nur bedingt geeignet.

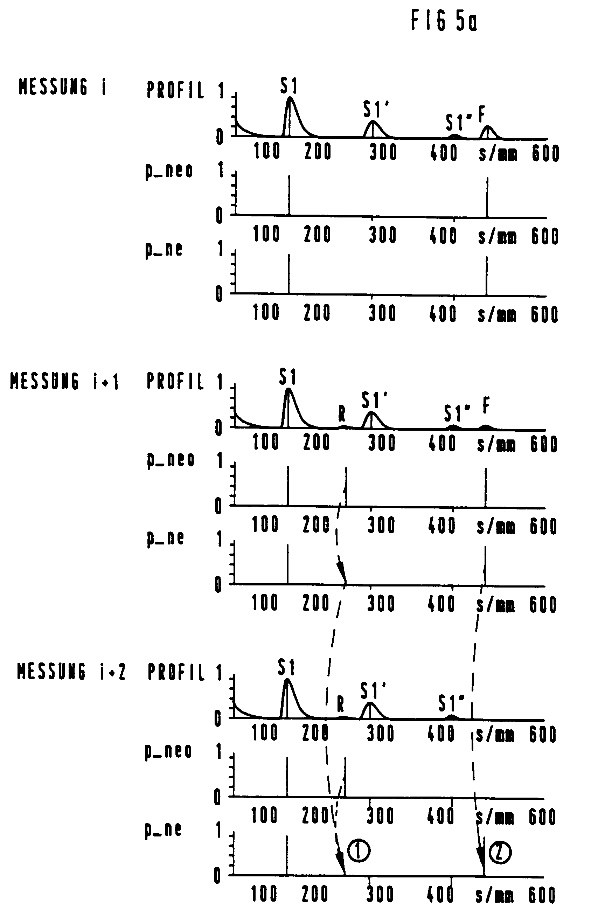

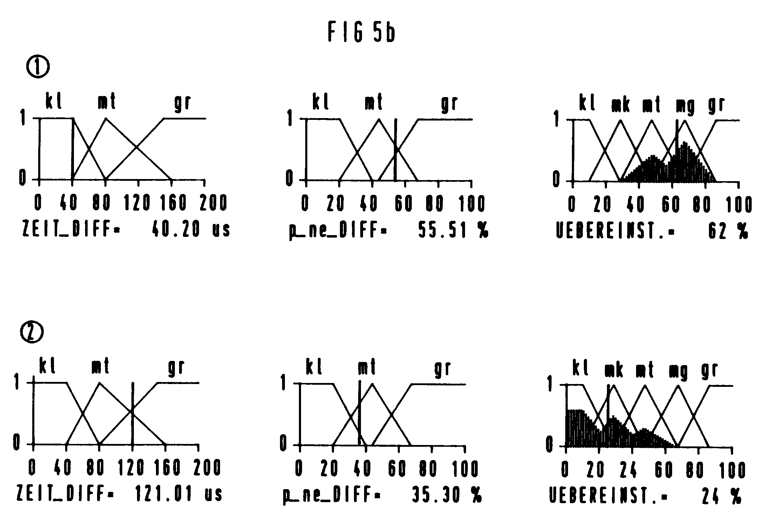

Bei dem hier vorgestellten Füllstandssensor erfolgt eine Plausibilitätsprüfung mit Hilfe von Fuzzy-Regeln. Dabei wird jedes Einzelecho der aktuellen Messung mit den Echos des vorhergehenden Meßzyklusses verglichen. Eine "gute" Übereinstimmung liegt dann vor, wenn sowohl die Laufzeitdifferenz als auch die Differenz der Mehrfachecho-Wahrscheinlichkeiten $P_{MFE}$ "klein" sind. Die Absolutwerte für "kleine", "mittlere" und "große" Laufzeitdifferenzen ergeben sich beispielsweise aus maximaler Befüllgeschwindigkeit und Meßrate. Je nach Güte der Übereinstimmung mit einem Echo der vorhergehenden Messung wird der Wert für die Nutzecho-Wahrscheinlichkeit $P_{NEo} = 1 - P_{MFE}$ der aktuellen Echos mit einem aus der Defuzzierung abgeleiteten Wichtungsfaktor multipliziert. Bei plötzlich verschwindenden Echos (z. B. Verdeckung durch Rührwerk) wird das aktuelle Profil durch das entsprechende Echo aus der vorhergehenden Messung mit verringerter Wichtung ergänzt. Damit enthält die jeweils letzte Messung das gewichtete akkumulierte Ergebnis aus mehreren vorhergehenden Meßzyklen. In Figur 5 ist das Verfahren schmatisch dargestellt.

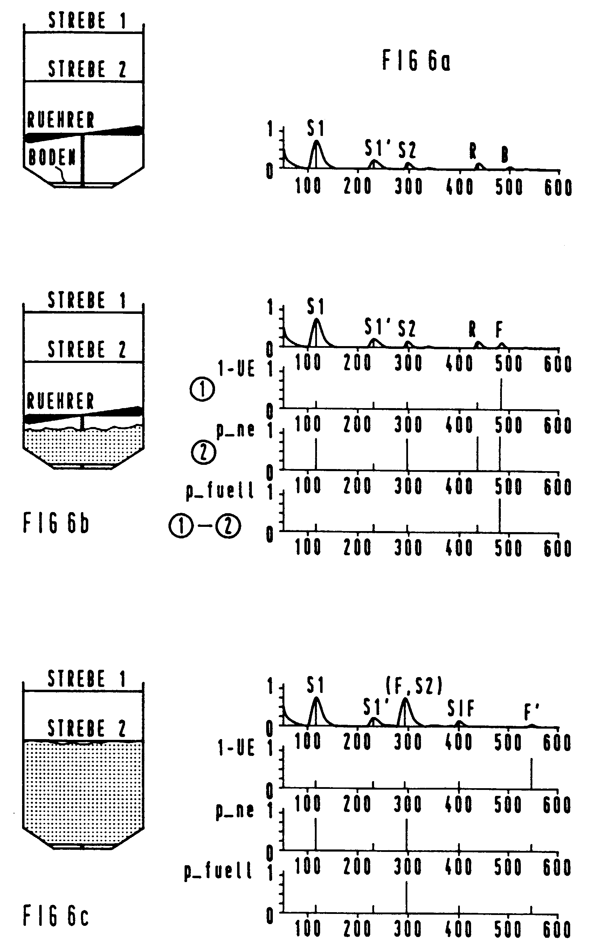

Ein Grundproblem bei der Ultraschall-Abstandsmessung gleichzeitig zu mehreren Objekten ist dadurch gegeben, daß echte Objektechos durch Mehrfach- oder andere Störreflexionen überdeckt werden können. Bei der Füllstandsmessung besteht die Aufgabe darin, das vom Füllgut reflektierte Schallsignal sicher zu detektieren, wobei dessen Amplitude sehr klein gegenüber den Festzielechos sein kann. Das erfindungsgemäße Verfahren wendet zusätzlich das Prinzip des Vergleichs zwischen dem in einer Einlernphase abgespeicherten Festziel-Echoprofil (einschließlich Rührwerke, welche sich periodisch im Erfassungsbereich des Sensors befinden) und dem im eigentlichen Meßbetrieb aufgenommenen Signalverlauf an. Dieser Vergleich wird im folgenden im Gegensatz zu herkömmlichen Füllstandssensoren ebenfalls mit Hilfe von Fuzzy-Regeln durchgeführt. Echos mit "guter" Übereinstimmung werden Festzielen zugeordnet und für die weitere Verarbeitung mit geringer Wichtung bewertet. Von den übrigen Echos wird das mit der größten Laufzeit, welches eine geringe MehrfachechoWahrscheinlichkeit besitzt, dem Füllgut zugeordnet. Für den Fall, daß alle detektierten Echos mit dem eingelernten Verlauf hinreichend gut übereinstimmen (z. B. wenn sich das Füllgut in Hohe eines Festzieles befindet), wird das letzte Echo mit hoher Nutzecho-Wahrscheinlichkeit ausgewertet. Die Bewertung der Abweichungen zwischen eingelerntem und gemessenem Echoprofil wird analog, wie vorher beschrieben, durchgeführt. Das Verfahren ist in Figur 6a-e illustriert. Vorteile der unscharfen Auswertung sind in der Kompensation von Driften und der damit möglichen adaptiven Nachführung des Teach-in-Verlaufes zu sehen.

Bei ungünstigen Reflexionsbedingungen an der Oberfläche eines Schüttgutes kann das eigentlich interessierende Füllstandsecho zeitweise bereits im Bereich der Rauschgrenze des Meßsystems liegen. In diesem Fall ist die Detektion des Nutzechos über mehrere Meßzyklen oft nur sporadisch möglich. Eine weitere Fehlerursache können Störechos bilden, welche durch parasitäre Reflexionswege zwischen dem Schüttgut und konstruktiven Elementen des Behälters entstehen, wie in Figur 6c gezeigt. Da diese Echos später als das Füllstandsecho am Schallempfänger eintreffen, können sie von der Auswertung fehlinterpretiert werden.

Zur Unterdrückung fehlerhafter Meßwertausgaben wird daher neben der im vorigen beschriebenen Fluktuationsbewertung eine zusätzliche Plausibilitätsprüfung des Meßergebnisses durchgeführt. Diese verwendet als Eingangsgrößen die Meßwerte mit der höchsten Nutzecho-Wahrscheinlichkeit ($P_{NE\,max}$) aus den letzten n Messungen sowie dem aktuell angezeigten Wert. Der Anzeigewert wird immer dann aktualisiert, wenn der neue Meßwert innerhalb der durch die maximale Befüll- bzw. Entleergeschwindigkeit vorgegebenen Toleranzzone liegt, wobei zur Glättung des Anzeigeverlaufes eine gleitende Mittelwertbildung durchgeführt wird. Im anderen Fall wird der Anzeigewert erst dann überschrieben, wenn alle Meßwerte der letzten n Zyklen innerhalb dieser Toleranzzone liegen und der zu den Echos mit der nächst höheren Nutzecho-Wahrscheinlichkeit über einer vorgegebenen Schwelle liegt. Wenn die Meßwerte unzulässig streuen, bleibt der jeweils letzte gültige Anzeigewert erhalten. Dieser Zustand wird zugleich durch ein Fehlerflag über die Anzeige signalisiert. Die Plausibilitätsprüfung des Anzeigewertes kann ebenfalls mit Hilfe von Fuzzy-Reglern erfolgen.

Die Konzeption des vorgestellten Auswerteverfahrens erlaubt die schrittweise Erprobung der einzelnen Module. Anhand von Testsituationen mit mehreren Reflektoren können die Fuzzy-Sets für die Bewertung von Mehrfachechos, zeitlichen Fluktuationen und Übereinstimmung mit dem Teach-in-Profil einzeln erstellt und optimiert werden.

Bild 7 zeigt den für die Füllstandsmessung realisierten Aufbau und ein Blockschaltbild der Auswerteeinheit.

Durch den Mikrocontroller MC wird in vorgegebenen Zeitabständen ein Sendeimpuls generiert, welcher über die Sendeendstufe SE an den Schallwandler USW geführt wird. Das abgestrahlte Schallsignal gelangt nach der Reflexion an den Objekten $O_a$, $O_b$, $O_c$ als Echoprofil EP zurück zum Schallwandler USW.. Nach Durchlaufen des Vorverstärkers/Hüllkurvendemodulators V erhält man die demodulierten Echos. Sobald im Empfangssignal ein vorgegebener Schwellwert überschritten wird, liefert ein Komparator ein entsprechendes Ausgangssignal, dessen Vorderflanke den Peakdetektor zur Messung der Echoamplitude sowie einen Integrator zur Bestimmung der Breite des Echos (Formfaktor) aktiviert. Wenn die maximale Echoamplitude erreicht ist, generiert der Peakdetektor ein Steuersignal, mit welchem der Inhalt der zur Lufzeitmessung verwendeten Zähler-/Speicherbaugruppe in den Zwischenspeicher übernommen wird. Mit der Rückflanke des Komparatorsignals werden die einzelnen Merkmale $t_e$, $A_e$, $F_e$ an die Fuzzyauswertung zur Echobewertung übergeben.

Die Fuzzyauswertung übernimmt die Mehrfachechobewertung mit der Vergabe einer Mehrfachechowahrscheinlichkeit $P_{-neo}$, die Fluktuationsbewertung mit der Vergabe einer Fluktuationswahrscheinlichkeit $P_{ne}$, den Vergleich mit den eingelernten Echos (Teach-in) mit der Vergabe einer Wahrscheinlichkeit $P_{fuell}$ und die Plausibilitätsüberprüfung mit der Vergabe einer Plausibilitätswahrscheinlichkeit $P_{meß}$. Die Mehrfachechobewertung und die Fluktuationsbewertung beschränken sich in ihrer Anwendung nicht nur auf die Füllstandsmeßung. Wo hingegen der Vergleich mit Eingelerntem und die Plausibilitätsprüfung füllstandsmeßspezifisch sind.

Alternativ kann der komplette Empfangssignalverlauf bzw. die demodulierte Hüllkurve mittels einer ADC-Baugruppe abgetastet und zwischengespeichert werden. Neben der Echobewertung erfolgt dann auch die Merkmalsextraktion durch entsprechende Software.

Die Untersuchungen zur Wichtung der Echomerkmale für die Mehrfachechoerkennung ergaben, daß die Laufzeit die größte Aussagekraft besitzt. Die Echoamplitude kann vor allem dann von Bedeutung sein, wenn Mehrfach- und Nutzecho zusammenfallen. Der Formfaktor besitzt das geringste Gewicht. Er trägt bei sich überlappenden Echos mit ähnlicher Amplitude zur verbesserten Bewertung von Mehrfachechos bei.

Gegenüber herkömmlichen Verfahren weist der beschriebene Fuzzy-Vergleich zwischen Teach-in-Echoprofil und Meßsignal wesentliche Vorteile auf, beispielsweise wenn vom Schüttgut selbst Mehrfachreflexionen erzeugt werden.

Das zunächst für Ultraschallsensoren beschriebene erfindungsgemäße Auswerteverfahren kann auch vorteilhaft auf berührungslos arbeitende Meßsysteme, welche auf der Ausbreitung elektromagnetischer Wellen beruhen, angewendet werden. Hierzu zählen beispielsweise Puls-Radar-Anordnungen zur Objektortung in größeren Entfernungen oder Mikrowellensensoren für die Abstandsmessung. Die Bewertung der Echoamplituden kann an die im jeweiligen Ausbreitungsmedium wirkende Dämpfung durch á priori Wissen optimal angepaßt werden.

## Patentansprüche

1. Verfahren zur Erkennung und Separation von Nutz- und Störechos im Empfangssignal von Abstandssensoren, welche nach dem Impuls-Echo-Prinzip arbeiten,

    1.1 bei dem die Maxima im Empfangssignal detektiert werden und jedem Maximum ein Echo zugeordnet wird,
    1.2 bei dem Formfaktoren, die die Form der Echos charakterisieren, gebildet und gespeichert werden,
    1.3 bei dem die Amplituden und die Zeitpunkte des Auftretens der Maxima gemessen und gespeichert werden,

    **gekennzeichnet durch** folgende Schritte:

    1.4 die Unterschiede zwischen den gemessenen Amplitudenwerten und Erwartungswerten der Amplituden, welche sich aus den reziproken Signallaufzeiten ergeben, werden bestimmt,
    1.5 die Unterschiede zwischen den gemessenen Zeitpunkten des Auftretens der Maxima und Erwartungswerten der Zeitpunkte des Auftretens der Maxima, welche sich aus den Signallaufzeiten ergeben, werden bestimmt,
    1.6 die Unterschiede zwischen den unter Schritt 1.2 bestimmten Formfaktoren und Erwartungswerten der Formfaktoren, welche sich aus den Formfaktoren der vorhergehenden Echos ergeben, werden bestimmt,
    1.7 die Wahrscheinlichkeit für ein Mehrfachecho wird als um so größer angenommen, je kleiner die Unterschiede sind, die in den Schritten 1.4, 1.5 und 1.6 bestimmt wurden,
    1.8 die Wahrscheinlichkeit für ein Störecho wird als um so größer angenommen, je größer die Wahrscheinlichkeit für ein Mehrfachecho ist,

    so daß ein Satz von Echos mit geringer Mehrfachechowahrscheinlichkeit ausgewählt wird und das Nutzecho daraus mit Hilfe von á priori-Wissen oder mit Wissen über die Meßhistorie bestimmt wird.

2. Verfahren nach Anspruch 1,
    **dadurch gekennzeichnet**, daß

    2.1 eine Referenzmessung ohne das Objekt, dessen Abstand zum Absstandssensor von Interesse ist, durchgeführt wird und das empfangene Referenzsignal gespeichert wird,
    2.2 eine Messung mit dem Objekt, dessen Abstand zum Abstandssensor von Interesse ist, durchgeführt wird und das empfangene Meßsignal gespeichert wird,

2.3 die Echos, die im Referenzsignal mit den Echos im Meßsignal übereinstimmen, Festzielechos zugeordnet werden, welche Störechos darstellen.

3. Verfahren nach Anspruch 1 oder 2,
**dadurch gekennzeichnet,**
daß zur Bestimmung des Formfaktors die Breite des Echos und die Breite des Echos bis zum Maximum zueinander ins Verhältnis gesetzt werden.

4. Verfahren nach Anspruch 1, 2 oder 3,
**dadurch gekennzeichnet,**
daß die Wahrscheinlichkeit für ein Mehrfachecho mittels Fuzzy-Logik bestimmt wird.

5. Verfahren nach einem der Ansprüche 1 bis 4,
**dadurch gekennzeichnet,**
daß die Wahrscheinlichkeit für ein Störecho mittels Fuzzy-Logik bestimmt wird.

6. Verfahren nach einem der Ansprüche 1 bis 5,
**dadurch gekennzeichnet,**
daß der Erwartungswert der Amplitude eines Maximums mittels der Proportionalität:

$$\text{Erwartungswert der Amplitude} \sim \frac{1}{\text{Signallaufzeit}}$$

bestimmt wird,
bei der die Signallaufzeit die Zeit ist, die vom Aussenden eines Signals bis zum Empfangen des reflektierten Signals vergeht.

7. Verfahren nach einem der Ansprüche 1 bis 6,
**dadurch gekennzeichnet,**
daß der Erwartungswert des Formfaktors für das auszuwertende Echo einer der Formfaktoren der vorhergehenden Echos ist.

8. Verwendung des Verfahrens nach einem der Ansprüche 1 bis 7,
**dadurch gekennzeichnet,**
daß es zur Füllstandsmessung eingesetzt wird.

## Claims

1. Process for the recognition and separation of useful and interfering echoes in the received signal of distance sensors, which operate in accordance with the pulse-echo principle,

    1.1 in which the maxima in the received signal are detected and an echo is associated with each maximum,
    1.2 in which form factors which characterize the form of the echoes are formed and stored,
    1.3 in which the amplitudes and the instants of occurrence of the maxima are measured and stored,

    characterized by the following steps:

    1.4 the differences between the measured amplitude values and expected values of the amplitudes which are obtained from the reciprocal signal transit times are determined,
    1.5 the differences between the measured instants of occurrence of the maxima and expected values of the instants of occurrence of the maxima which are obtained from the signal transit times are determined,
    1.6 the differences between the form factors determined in step 1.2 and expected values of the form factors which are obtained from the form factors of the preceding echoes are determined,
    1.7 the probability for a multiple echo is assumed to be the greater, the smaller are the differences which were determined in the steps 1.4, 1.5 and 1.6,
    1.8 the probability for an interfering echo is assumed to be the greater, the greater the probability for a multiple echo,

so that a set of echoes with low multiple echo probability is selected and the useful echo is determined therefrom with the aid of a priori knowledge or with knowledge of the measurement history.

2. Process according to Claim 1, characterized in that

2.1 a reference measurement is carried out without the object the distance of which from the distance sensor is of interest, and the received reference signal is stored,

2.2 a measurement is carried out with the object the distance of which from the distance sensor is of interest, and the received measurement signal is stored,

2.3 the echoes which in the reference signal are in concordance with the echoes in the measurement signal are allocated to fixed target echoes which represent interfering echoes.

3. Process according to Claim 1 or 2, characterized in that to determine the form factor, the width of the echo and the width of the echo up to the maximum are set in ratio to one another.

4. Process according to Claim 1, 2 or 3, characterized in that the probability for a multiple echo is determined by means of fuzzy logic.

5. Process according to one of Claims 1 to 4, characterized in that the probability for an interfering echo is determined by means of fuzzy logic.

6. Process according to one of Claims 1 to 5, characterized in that the expected value of the amplitude of a maximum is determined by means of the proportionality:

$$\text{Expected value of the amplitude} \sim \frac{1}{\text{Signal transit time}}$$

in which the signal transit time is the time which elapses from the emission of a signal to the reception of the reflected signal.

7. Process according to one of Claims 1 to 6, characterized in that the expected value of the form factor for the echo to be evaluated is one of the form factors of the preceding echoes.

8. Use of the process according to one of Claims 1 to 7, characterized in that it is used for filling-level measurement.


**Revendications**

1. Procédé de reconnaissance et de discrimination d'échos utiles et d'échos parasites dans le signal de réception de capteurs de distance fonctionnant selon le principe impulsion-écho,

1.1 dans lequel on détecte les maxima dans le signal de réception et on associe un écho à chaque maximum

1.2 dans lequel on forme et on enregistre les facteurs de forme caractérisant la forme des échos

1.3 dans lequel on mesure et on enregistre les amplitudes et les instants de l'apparition des maxima,

caractérisé par les phases suivantes :

1.4 on détermine les différences entre les valeurs mesurées des amplitudes et les valeurs escomptées des amplitudes résultant des temps de propagation réciproques du signal,

1.5 on détermine les différences entre les instants mesurés de l'apparition des maxima et les valeurs escomptées des instants de l'apparition des maxima résultant des temps de propagation du signal,

1.6 on détermine les différences entre les facteurs de forme déterminés dans la phase 1.2 et les valeurs escomptées des facteurs de forme résultant des facteurs de forme des échos précédents,

1.7 on suppose que la probabilité d'un écho multiple est d'autant plus grande que les différences déterminées dans les phases 1.4, 1.5 et 1.6 sont petites,

1.8 on suppose que la probabilité d'un écho parasite est d'autant plus grande que la probabilité d'un écho multiple est grande,

de manière à choisir un ensemble d'échos à faible probabilité d'écho multiple pour en déterminer l'écho utile à l'aide de la connaissance à priori et de la connaissance de l'historique de mesure.

2. Procédé selon la revendication 1, caractérisé en ce que

2.1 on effectue une mesure de référence sans l'objet dont on veut connaître la distance par rapport au capteur de distance, et on enregistre le signal de réception reçu,

2.2 on effectue une mesure avec l'objet dont on veut connaître la distance par rapport au capteur de distance, et on enregistre le signal de réception reçu,

2.3 on associe les échos, qui correspondent dans le signal de référence avec les échos dans le signal de mesure, à des échos fixes représentant des échos parasites.

3. Procédé selon la revendication 1 ou 2, caractérisé en ce que, pour déterminer le facteur de forme, on met en rapport la largeur de l'écho et la largeur de l'écho jusqu'au maximum.

4. Procédé selon la revendication 1, 2 ou 3, caractérisé en ce qu'on détermine la probabilité d'un écho multiple par logique floue.

5. Procédé selon l'une des revendications 1 à 4, caractérisé en ce qu'on détermine la probabilité d'un écho parasite par logique floue.

6. Procédé selon l'une des revendications 1 à 5, caractérisé en ce qu'on détermine la valeur escomptée de l'amplitude d'un maximum à l'aide de la proportionnalité :

$$\text{Valeur escomptée de l'amplitude} \sim \frac{1}{\text{temps de propagation du signal}}$$

où le temps de propagation du signal est le temps s'écoulant entre l'émission d'un signal et la réception du signal réfléchi.

7. Procédé selon l'une des revendications 1 à 6, caractérisé en ce que la valeur escomptée du facteur de forme de l'écho à évaluer est l'un des facteurs de forme des échos précédents.

8. Utilisation du procédé selon l'une des revendications 1 à 7, caractérisé en ce qu'il est employé pour la mesure du niveau.

FIG 1

FIG 2

FIG 3

FIG 4a

# FIG 4b

# FIG 5a

FIG 5b

EP 0 689 679 B1

FIG 6a

FIG 6b

FIG 6c

16

EP 0 689 679 B1

FIG 7

SE

USW

ANGEPASSTE
ANREGUNG

A
D

IMPULS
ANREGUNG

EP          HK

V

A
D

MERKMALS-
EXTRAKTION

5°

Ob

Oa

Oc

1m

ØD.2m

TEACH IN

VORGE-
SCHICHTE

FUZZY-
AUSWERTUNG

$t_e, A_e, F_e$

BEWERTETES
ECHOPROFIL

MESSWERTAUSGABE
(FUELLSTAND)

MC

MEHRFACHECHOBEWERTUNG

FLUKTUATIONSBEWERTUNG

VERGLEICH MIT TEACH IN

PLAUSIBILITAETSPRUEFUNG

$p\_ne_0$

$p\_ne$

$p\_fuell$

$p\_mess$